# EUROPEAN PATENT SPECIFICATION

(11) **EP 2 556 573 B1**
(45) Date of publication and mention of the grant of the patent: **16.04.2014**
(21) Application number: 10809254.5
(22) Date of filing: 27.12.2010
(51) Int. Cl.: H02H 1/00

(54) **ARC PREVENTING SWITCH**
SCHALTER ZUR VERMEIDUNG VON LICHTBOGENBILDUNG
COMMUTATEUR PERMETTANT DE LUTTER CONTRE LES ARCS ÉLECTRIQUES

(30) Priority: 07.04.2010 SI 201000115
(43) Date of publication of application: 13.02.2013
(73) Proprietor: Eti Elektroelement D.D., 1411 Izlake (SI)
(72) Inventor: KOPRIVSEK, Mitja, 1411 Izlake (SI); LEBAR, Brane, 1410 Zagorje ob Savi (SI)
(74) Representative: Borstar, Dusan
(86) International application number: PCT/SI2010/000073
(87) International publication number: WO 2011/126460

(56) References cited:
- WO-A1-2004/059811
- WO-A2-2010/078303
- JP-A- 2003 153 434

## Description

The present invention refers to an are preventing switch, which belongs to the field of protective switches and disconnecting appliances in various installations, in particular in DC installations like photovoltaic power plants or installations in vehicles-According to the International Patent Classification, such inventions belong to electricity, namely to generating, transforming and distribution of electricity and in particular to protective electric circuits, which are intended for automatically disconnecting each circuit, in which an undesired deviation occurs with respect to usual operation conditions.

The purpose of the invention is to create a switch, by means of which formation of an arc due to e.g. a defect of a conductor or due to a contact between conductors could be detected in a DC electric current, and prompt interrupting such circuit without generating an excess current, wherein such switch should include exclusively such components and circuit, which are able to operate without any supplemental voltage source.

Intensifying of exploitation of renewable electric energy resources resulted in widely using of photovoltaic power plants. In photovoltaic power plants, essential components thereof, namely photovoltaic panels consisting of a plurality of photovoltaic cells, are able to produce electric energy by means of sun light. Electric voltage is generated on connectors of such photovoltaic panel, for which also abbreviation PV is used in the further description, and consequently also a direct electric current, which practically remains unchanged regardless to intensity of illuminating such PV panel and is in such circuits normally around 10 A (DC). However, by increasing or decreasing illumination of panel the electric voltage on contact of PV panel is varied. Voltage in such circuits is normally between 100 V and several 1000 V (DC). Accordingly, such PV panels operate like current generators operating in permanent current and variable voltage conditions.

A huge problem occurs when electric conductors or installations are damaged, which are used for establishing connection among PV panels and the central unit of such power. Whenever conductors are damaged a contact is established between a positive pole and a negative pole of the PV panel. An electric arc occurs, which may destroy the conductor and installation and moreover also generate a flame.

In usual electric installations in buildings or in industrial plants with alternative voltage 230/400 V, potential defects in installation are handled by means of excessive current protective appliances and differential current appliances, where by occurring a contact between two conductors the current is increasing, and excessive current occurs, which is then interrupted by means of appropriate protective appliance. Another defect may occur due to contact between the phase conductor and the earth conductor, where a differential current may be detected, which is then detected by means of a differential current protective appliance. On the contrary, whenever a defect would occur on the conductors of a PV panel, the current would not increase, although the arc persists at approximately the same level of the currency like before the defect has occurred. The consequence of such phenomena is a so-called parallel arc, which is a permanently active arc and is interrupted only upon decreasing of illumination of the PV panel, when the voltage on connectors is decreased below the value, which does not allow maintaining the arc active.

Similar problems may occur due to weak electric contact in one of contact points within a direct (DC) circuit of PV panel(s), which may result either from mechanical damages or also from corrosion. Just a short undesired interruption may result in occurring an electric arc, which due to sufficiently high voltage on PV panel cannot be interrupted, by which the damages on installation are unavoidable. Such phenomena is known as a serial arc and the importance including the risk related thereto is increasing in correlation with growing the number of photovoltaic power plants, which were built-up during the last time.

It s expected that same problems of generating arc in installations, which were in the past merely related to PV panels, shall also occur by increasing of exploitation of electric vehicles, where higher direct electric voltage of 48 V or more is used. Although conditions in regard of current and voltage are slightly different than in PV power plant, since the voltage is lower and the current is higher, each available electric power in vehicles is quite sufficient to generate an arc with above specified negative impacts.

Both these problems, namely formation of a serial arc and parallel arc, are also in literature described among crucial problems in building-up and operating of photovoltaic power plants. There is a need in the technical field on finding-out a solution in course of preventing arc formation and consequences resulting there-from, by which such device should moreover operate without any need on providing a supplemental voltage source, if possible. Such supplemental voltage source would namely mean not only a permanently supplying energy and consumption related thereto but also a risk that in various circumstances, e.g. due to thunder-bolt during the storms or the like, such supplemental energy providing source could be damaged, by which reliability of complete appliance would then be questionable.

A known are fault detecting system adapted for use in DC circuits is disclosed in WO 2004/059811.

US 6,377,055 B1 has proposed an arc detecting appliance, which operates in two levels. The first level includes a current transformer, through which at least one conductor extends. This first level is intended for detection of small currency values, since higher values may lead to saturation of the core of said current transformer, by which the output signal on the secondary side becomes too weak. The second detecting level is foreseen as a resistance in a conductor, where the voltage drop occurs, which is in correlation with the arc current. Both signals are transferred towards the amplifier. When the arc current is low, then the contribution of the secondary side of the current transformer is greater, and by higher current the contribution from the resistance part is greater. When the input signal corresponds to a pre-determined value, then an output signal is generated on said amplifier, which by means of a triode initiates a coil of an electromagnetic actuator, by which then the contacts are disconnected and the circuit is interrupted. The major deficiencies are undefined frequency range during operation and the need on providing a supplemental voltage source, which is required for the purposes of operation.

A similar appliance is described in US 7,205,772 B2, and is intended for detecting arc, in particular in a 48 V (DC) voltage electric installations in motor vehicles. Detecting of arc is initially based on determining a voltage drop on a resistance in a conductor, which is then compared with a pre-determined threshold, and on generating a signal when the threshold is exceeded. Upon that, the current through the current transformer is detected, where the induced secondary voltage is filtered and compared with a pre-determined threshold. The arc detector is a so-called *Schmitt trigger.* The main deficiency represents a relatively complicated electronic circuit, which may in addition operate only when a supplemental voltage source is assured.

Moreover, an arc detector for alternating current is proposed in US 2008/0140354 A1. A detected signal is split and transferred along four paths by forming four different signals. The first signal refers to a current in a phase conductor. The second signal is an impulse showing a positive change of current, and the third shows a negative change of the current. The fourth signal refers to voltage of a wide band signal in a phase conductor. Such appliance includes a current transformer, through which a phase conductor extends, a differential transformer, through which a phase and neutral conductor extend, a voltage sensor and a complicated electronic circuit together with a micro-controller. Like all previously described appliances, also in this case a supplemental voltage source must be assured, which is an undesired deficiency of such appliance.

In addition to previously described solutions, the prior art also includes known protective switches, which are operating on the basis of differential current and by means of which professionals are resolving problems related to disconnection of each desired parts of installations by occurring defects e.g. due to differential current. Such switches operate on the basis of a differential current transformer, where on the secondary side a signal is obtained in the case of relatively low current differences of e.g. 10 mA to 30 mA on the primary side. A low-power secondary signal within a range between 50 and 100 µVA is transferred to an electro-magneto-mechanical actuator, which is called a differential current relay or a FI-relay. It consists of a yoke with a permanent magnet as well as of an anchor, which is held by a spring. When the actuator inactive, the anchor is pressed towards the yoke by means of a magnetic flux resulting from said permanent magnet. As soon as a differential current occurs between the phase conductor and the neutral conductor, additional magnetic flux is generated within the coil of the relay, which is directed opposite to the magnetic flux resulting from said permanent magnet. Consequently, the actuator is activated, and by means of said spring a needle is ejected from the actuator in order to abut appropriate mechanism, which leads to interruption in the area of main contacts of the interruptor of such switch. One of known embodiments of such switch is described in EP 0 508 052 B1. Indeed, no supplemental voltage source is required for the purposes of operating such actuator, but such appliance is also unable to detect a serial or parallel arc in direct voltage DC circuits in photovoltaic PV power plants.

The invention refers to an arc preventing switch, which is foreseen for integration into each available electric circuit, consisting at least of a DC direct voltage source, as well as of at least one load, which is via appropriate electric conductors either directly or indirectly via at least one electric component like e.g. a DC/AC convertor electrically interconnected with said source.

In accordance with the present invention according to the features of claim 1, said switch comprises an interruptor, which is controlled by means of a control mechanism, which is actuated by means of an actuator, which is controlled by a passive electronic circuit, which is electrically connected with a secondary coil of a differential current transformer, the primary coil of which is via a conductor serial connected with a capacitor, wherein said transformer and said capacitor are together connected in parallel with a coil, which is integrated within a conductor between a direct voltage source and each load.

In this, the passive electronic circuit comprises a diode AM detector, which is serial connected to a secondary coil of the transformer and to which a low-frequency filter is serial connected, which is per se serial connected with a capacitor, wherein a voltage switch, which is serial connected with an actuator, is serial connected with said filter. Said actuator is adapted for activation by means of a loaded capacitor, which is charged by means of the secondary coil of the transformer via the AM diode detector and the low-frequency filter.

In one of possible embodiments, said actuator is used not only for disconnecting the circuit by occurring either a serial arc (AS) or a parallel arc (AP) but also for disconnecting each load and disconnecting it from the direct voltage (DC) source and other components of installation. In a further embodiment, the switch comprises four interruptors.

In a preferred embodiment, the direct voltage (DC) source (1) represents either at least one photovoltaic cell or a photovoltaic panel comprising at least two photovoltaic cells or s a photovoltaic power plant comprising at least two photovoltaic panels. In such case, each electric load is indirectly via at least a DC/AC convertor electrically interconnected with said direct voltage (DC) source.

The invention will be described in more detail on the basis of two embodiments, which are shown in the attached drawing, wherein
Fig. 1 is a schematic presentation of a prior art related background of the invention;
Fig. 2 is a schematically shown arc preventing switch according to the invention;
Fig. 3 is a schematically shown electric circuit of the switch according to Fig. 2; and
Fig. 4 is a further possible embodiment of the switch according to the invention.

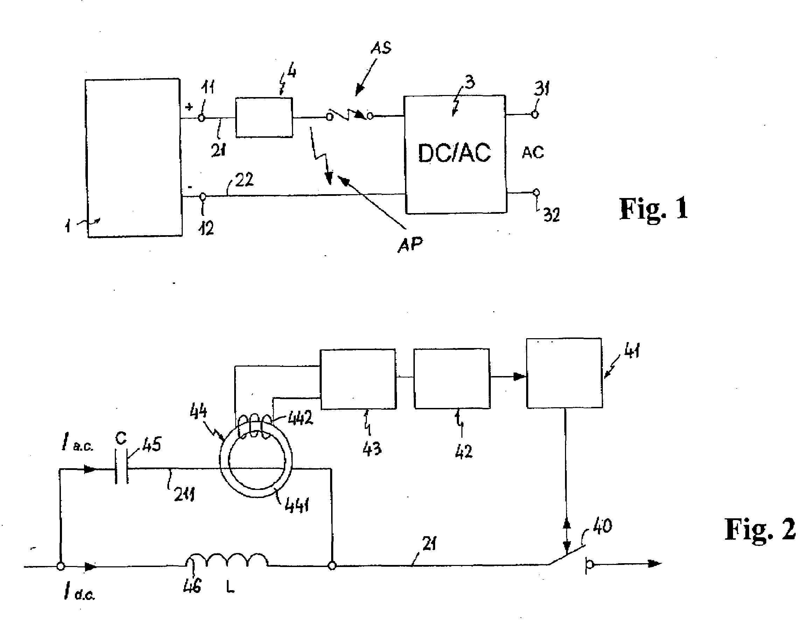

A direct electric circuit (DC) is shown in Fig. 1, in which generally a direct voltage source 1 is foreseen and which is furnished with connectors 11, 12, to which electric conductors 21, 22 are connected, by which said voltage source 1 is electrically connected with each load. An arc preventing switch 4 according to the invention is integrated in such circuit in the area of said conductor 21 for the purpose of preventing formation of parallel arc (AP) or serial arc (AS).

Said circuit according to Fig. 1 is a circuit of a PV panel, namely a photovoltaic panel, which serves as a direct voltage source 1. In the shown embodiment, said PV panel as a direct voltage source 1, when exposed to light rays, generates a direct voltage (DC) and corresponding electric current, which is via said conductors 21, 22 supplied to a DC/AC convertor 3, which is furnished with connectors 31, 32, on which an alternating (AC) voltage are available, so that appropriate load may then be connected to said connectors 31, 32. Whenever a defect occurs in the area of said conductors 21, 22 of PV panel as voltage sources 1, instead of increasing the current a parallel arc may occur, which is in Fig. 1 marked as AP and which may be eliminated only by means of reduction the current on the source 1 i.e. by decreasing of illumination of a PV panel. On the other hand, such problem may also occur due to weak electric contact in one of contact points on at least one of said conductors 21, 22 within a direct (DC) circuit of said source 1 e.g. a PV panel, which may result from mechanical damages or corrosion. A short undesired interruption may lead to occurring a so-called serial arc, which is in Fig. 1 marked as AS and which cannot be eliminated until the voltage is sufficiently high, by which corresponding damages on conductors cannot be avoided.

As evident in Fig. 1, the arc preventing switch 4 comprises an interruptor 40, which is controlled by means of a control mechanism 41, which is actuated by means of an actuator 42, which is controlled by a passive electronic circuit 43, which is electrically connected by a secondary coil 442 of a differential current transformer 44, the primary coil 441 of which is via a conductor 211 serial connected with a capacitor 45, wherein said transformer 44 and said capacitor 45 are together connected in parallel with a coil 46, which is integrated within a conductor 21 between a direct voltage (DC) source 1 and each load 3.

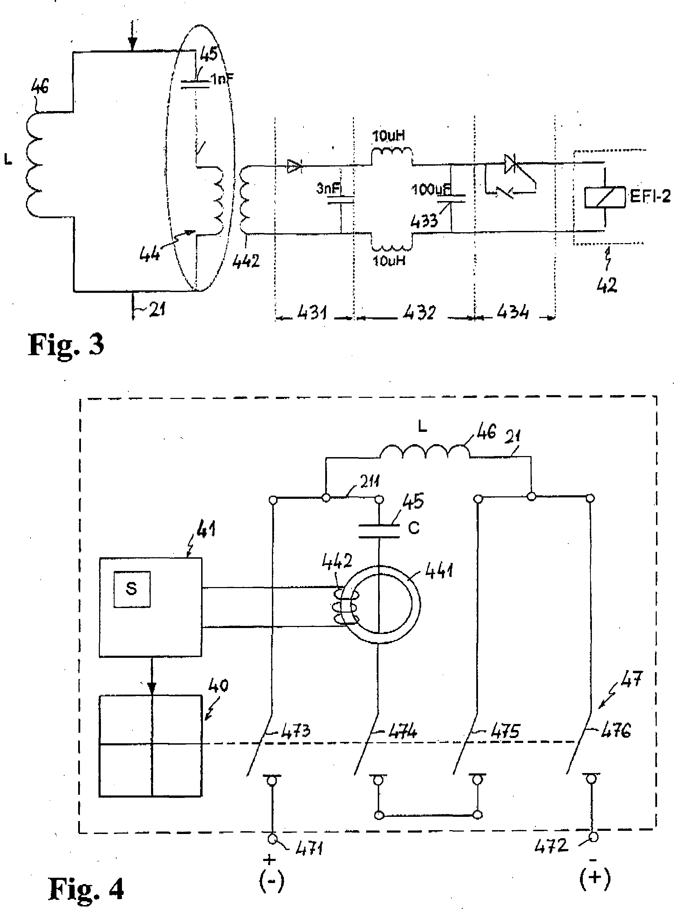

The current in each arc AP, AS consists of two components, namely of a direct (DC) current, which is normally in the range between several A and to 10 - 20 A when PV panel is used as a voltage source 1, while by generating an arc also the alternative current component (AC) is present with a relatively high frequency within the kHz range. In accordance with the present invention, applying a current transformer 44 is surprisingly useful, wherein an actuator 42 operating independently of each voltage is connected to a secondary coil 442, and simultaneously all elements of the passive electronic circuit 43 are also integrated within the secondary circuit. In this, the direct component (DC) is transferred via the coil 64 i.e. inductivity L apart from the current transformer 22. The current transformer 44 essentially consists of a differential transformer of a switch, which is to those skilled in the art known as a EFI-switch, although only a single conductor 211 extends there-through in this particular case. When desired, such known and appropriately modified EFI-switch may be used as a basis for manufacturing of the arc preventing switch according to the invention, which will be later described in connection with Fig. 4.

Thanks to said parallel connection of said coil 46 i.e. inductivity L and the differential current transformer 44, which is in the area of its primary coil 441 by corresponding conductor 211 serial interconnected with the capacitor 45, the direct circuit component is not transferred through the primary coil 441 of the transformer 44. If said direct current component would be transferred through the primary coil 441, the core of the transformer 44 would be saturated and the alternative arc current component would not produce secondary inductive voltage. In such case, the switch could not identify the arc current.

Said capacitor 44 is determined to allow transmission of high-frequency current obtained in serial arc AS or parallel arc AP. Alternative voltage, which is with respect to frequency synchronized with the arc current in the primary coil 441, is induced in the secondary coil 442 of the transformer 44. Such signal is then transferred through the passive electronic circuit 43 for the purpose of transforming thereof into a form, which is capable to activate the actuator 42.

Said actuator 42 is a differential current relay, which is known to those skilled in the art (e.g. in the prior art like EP 0 508 052 or is also commercially available, which is manufactured by the applicant under the name EFI) and is therefore not separately shown in the drawing. It consists of a not shown yoke with a permanent magnet as well as of an anchor, which is held by a spring. When the actuator 42 inactive the anchor is pressed towards the yoke by means of a magnetic flux resulting from said permanent magnet. As soon as a differential current occurs between the phase conductor and the neutral conductor, additional magnetic flux is generated within the coil of the relay 42, which is directed opposite to the magnetic flux resulting from said permanent magnet. Consequently, the actuator is activated, and by means of said spring a needle is ejected from the actuator in order to abut appropriate mechanism 41, which leads to interruption in the area of main contacts of the interruptor 40 of such switch. No additional voltage source is required for the purposes of operating such actuator 42 and for controlling the mechanism 41 of the interruptor 40, but at the same time it is also unable to detect neither a serial arc SA nor a parallel arc AP within a direct current (DC) circuit, e.g. in a circuit of conductors 21, 22, where a direct voltage (DC) source 1 represent photovoltaic (PV) modules in power plants.

An embodiment of said passive electronic circuit 43 is shown in Fig. 3 comprises several levels. A signal is transferred from the transformer 44 to a diode AM detector 431, upon which a demodulated signal is via a NF low frequency filter 432 transferred to a capacitor 433, which starts charging. As soon as the capacitor 433 is charged up to a desired level, a voltage switch 434 is activated, through which the previously loaded capacitor 422 is then discharged. The discharging current is sufficient to activate the actuator 42, which is serial interconnected with the voltage switch 434 of said circuit 43.

The circuit according to Fig. 3 has been prepared by anticipating the alternative component of the arc current AP, AS within the range of approximately 100 KHz. Such value has been measured by simulating an arc resulting from current of 0,35 A (DC) and voltage of 600 V (DC). It is however possible that by some higher current within the range of several A up to 10-20 A (DC) the frequency could be changed (decreased). In such case, a serial oscillating circuit in the primary coil 441 of the current transformer 44 would have to be appropriately amended. It is also possible to foreseen two or more serial oscillating circuits, which would be each per se directed throughout the core of the transformer 44. In such case, each such oscillating circuit should be adjusted to its own frequency, by which all frequency ranges would be covered, which might result from a serial arc SA or a parallel arc AP.

Furthermore, an embodiment is shown in Fig. 4, where an arc preventing switch according to the invention is integrated into a previously mentioned known switch, which is commercially available under the name EFI-4. In such case, upon integrating the switch 4 into the casing of such EFI-4 switch 47, such switch according to the invention would enable not only detecting the arc current but also interruption when a defect would occur and/or a manual switching on/off. In such case, all four interruptors 473, 474, 475, 476 would have to be serial interconnected, since relatively high DC voltages are expected. Only two connectors 471, 472 of the EFI-4 switch would be used in combination with such switch 4 according to the invention. As evident in Fig. 4, also in such case the interruptor 40 is controlled by means of a control mechanism 41, which is integrated into a secondary circuit.

On the basis of the previous description those skilled in the art should understand that the arc preventing switch according to the invention enables detecting defects by occurring the arc AP, AS and promptly disconnecting a voltage source 1, e.g. a PV panel. In addition to that, the switch 4 according to the invention may also be used as a disconnecting switch for the purposes of connecting or disconnecting of a PV module whenever it needs to be disconnected from accompanying installation, wherein the switch is selected in such a manner that it cannot be activated during common switching procedures or by other transitional phenomena in the PV installation.

## Claims

1. Arc preventing switch (4), which is foreseen for integration into each available electric circuit, consisting at least of a DC direct voltage source (1), as well as of at least one load, which is via appropriate electric conductors (21, 22) either directly or indirectly via at least one electric component like e.g. a DC/AC convertor (3) electrically interconnected with said source (1), said switch comprising an interruptor (40), which is controlled by means of a control mechanism (41), which is actuated by means of an actuator (42), which is controlled by a passive electronic circuit (43), which is electrically connected with a secondary coil (442) of a differential current transformer (44), the primary coil (441) of which is via a conductor (211) serial connected with a capacitor (45), wherein said transformer (44) and said capacitor (45) are together connected in parallel with a coil (46), which is integrated within a conductor (21) between a direct voltage (DC) source (1) and each load.

2. Arc preventing switch according to Claim 1, **characterized in that** the passive electronic circuit (43) comprises a diode AM detector (431), which is serial connected to a secondary coil (442) of the transformer (44) and to which a low-frequency filter (432) is serial connected, which is per se serial connected with a capacitor (443), wherein a voltage switch (434), which is serial connected with an actuator (42), is serial connected with said filter (432)

3. Arc preventing switch according to Claim 2, **characterized in that** the actuator is adapted for activation by means of a loaded capacitor (433), which is charged by means of the secondary coil (442) of the transformer (44) via the AM diode detector (431) and the low-frequency filter (432).

4. Arc preventing switch according to one of the preceding Claims, **characterized in that** the actuator (42) is used not only for disconnecting the circuit by occurring either a serial arc (AS) or a parallel arc (AP) but also for disconnecting each load and disconnecting it from the direct voltage (DC) source (1) and other components of installation.

5. Arc preventing switch according to Claim 4, **characterized in that** it is a switch (47) having at least four interruptors (473, 474, 475, 476).

6. Arc preventing switch according to one of the preceding Claims, **characterized in that** the direct voltage (DC) source (1) represents at least one photovoltaic cell.

7. Arc preventing switch according to Claims 1 - 5, **characterized in that** the direct voltage (DC) source (1) represents a photovoltaic panel comprising at least two photovoltaic cells.

8. Arc preventing switch according to Claims 1 - 5, **characterized in that** the direct voltage (DC) source (1) is a photovoltaic power plant comprising at least two photovoltaic panels.

9. Arc preventing switch according to one of the preceding Claims, **characterized in that** each electric load is indirectly via at least a DC/AC convertor (3) electrically interconnected with said direct voltage (DC) source (1).

## Patentansprüche

1. Schalter (4) zur Vermeidung von Lichtbogenbildung, der für den Einbau in jeden erhältlichen elektrischen Stromkreis vorgesehen ist, der mindestens aus einer Gleichstrom-Spannungsquelle (1) sowie aus mindestens einer Last besteht, welche über geeignete elektrische Leiter (21, 22) entweder direkt oder indirekt über mindestens ein elektrisches Bauteil wie z. B. einen Gleichstrom-/Wechselstrom-Wandler (3) elektrisch mit der Quelle (1) verbunden ist, wobei der Schalter einen Unterbrecher (40) aufweist, der von einem Steuermechanismus (41) gesteuert wird, der mittels eines Stellglieds (42) betätigt wird, das durch eine passive elektronische Schaltung (43) gesteuert wird, welche mit einer Sekundärspule (442) eines Differenzstromwandlers (44) elektrisch verbunden ist, wobei dessen Primärspule (441) über einen Leiter (221) seriell mit einem Kondensator (45) verbunden ist, wobei der Wandler (44) und der Kondensator (45) parallel mit einer Spule (46) geschaltet sind, die in einem Leiter (21) zwischen der Gleichstrom-Spannungsquelle (1) und jeder Last integriert ist.

2. Schalter zur Vermeidung von Lichtbogenbildung gemäß Anspruch 1, **dadurch gekennzeichnet, dass** die passive elektronische Schaltung (43) einen AM-Diodendetektor (431) aufweist, der seriell an einer Sekundärspule (442) des Wandlers (44) angeschlossen ist und an den ein Niedrigfrequenzfilter (432) seriell angeschlossen ist, der an sich mit einem Kondensator (443) seriell verbunden ist, wobei ein Spannungsschalter (434), der seriell an ein Stellglied (42) angeschlossen ist, seriell mit dem Filter (432) verbunden ist.

3. Schalter zur Vermeidung von Lichtbogenbildung gemäß Anspruch 2, **dadurch gekennzeichnet, dass** das Stellglied zur Aktivierung mittels eines geladenen Kondensators (433) ausgebildet ist, der mittels der Sekundärspule (442) des Wandlers (44) über den AM-Diodendetektor (431) und den Niedrigfrequenzfilter (432) geladen wird.

4. Schalter zur Vermeidung von Lichtbogenbildung gemäß einem der vorhergehenden Ansprüche, **dadurch gekennzeichnet, dass** das Stellglied (42) nicht nur zum Abschalten der Schaltung durch Auftreten eines seriellen Lichtbogens (AS) oder eines parallelen Lichtbogens (AP), sondern auch zum Trennen jeder Last und Trennen dieser von der Gleichstrom-Spannungsquelle (1) und anderen Bauteilen der Einrichtung verwendet wird.

5. Schalter zur Vermeidung von Lichtbogenbildung gemäß Anspruch 4, **dadurch gekennzeichnet, dass** er ein Schalter (47) mit mindestens vier Unterbrechern (473, 474, 475, 476) ist.

6. Schalter zur Vermeidung von Lichtbogenbildung gemäß einem der vorhergehenden Ansprüche, **dadurch gekennzeichnet, dass** die Gleichstrom-Spannungsquelle (1) mindestens eine Photovoltaikzelle ist.

7. Schalter zur Vermeidung von Lichtbogenbildung gemäß den Ansprüchen 1 bis 5, **dadurch gekennzeichnet, dass** die Gleichstrom-Spannungsquelle (1) ein Photovoltaikpaneel mit mindestens zwei Photovoltaikzellen ist.

8. Schalter zur Vermeidung von Lichtbogenbildung gemäß den Ansprüchen 1 bis 5, **dadurch gekennzeichnet, dass** die Gleichstrom-Spannungsquelle (1) eine Photovoltaikanlage mit mindestens zwei Photovoltaikpaneelen ist.

9. Schalter zur Vermeidung von Lichtbogenbildung gemäß einem der vorhergehenden Ansprüche, **dadurch gekennzeichnet, dass** jede elektrische Last indirekt über mindestens einen Gleichstrom-/Wechselstrom-Wandler (3) mit der Gleichstrom-Spannungsquelle (1) elektrisch verbunden ist.

## Revendications

1. Commutateur (4) avec système de prévention d'arc, qui est prévu pour une intégration dans chaque circuit électrique disponible, consistant au moins en une source (1) de tension continue CC, ainsi qu'en au moins une charge, qui est, par l'intermédiaire de conducteurs électriques (21, 22) appropriés, soit directement, soit indirectement par l'intermédiaire d'au moins un composant électrique tel que, par exemple, un convertisseur (3) CC/CA, électriquement interconnecté avec ladite source (1), ledit commutateur comprenant un interrupteur (40), qui est contrôlé au moyen d'un mécanisme (41) de contrôle, qui est actionné au moyen d'un actionneur (42), qui est contrôlé par un circuit électronique (43) passif, qui est électriquement connecté avec une bobine secondaire (442) d'un transformateur (44) différentiel de courant, dont la bobine primaire (441) est, par l'intermédiaire d'un conducteur (211), connectée en série avec un condensateur (45), dans lequel ledit transformateur (44) et ledit condensateur (45) sont ensemble connectés en parallèle avec une bobine (46), qui est intégrée au sein d'un conducteur (21) entre une source (1) de tension continue (CC) et chaque charge.

2. Commutateur avec système de prévention d'arc selon la revendication 1, **caractérisé en ce que** le circuit électronique (43) passif comprend un détecteur (431) AM à diode, qui est connecté en série à une bobine secondaire (442) du transformateur (44) et auquel un filtre (432) basse fréquence est connecté en série, qui est perse connecté en série avec un condensateur (443), dans lequel un commutateur (434) de tension, qui est connecté en série avec un actionneur (42), est connecté en série avec ledit filtre (432).

3. Commutateur avec système de prévention d'arc selon la revendication 2, **caractérisé en ce que** l'actionneur est adapté à une activation au moyen d'un condensateur (433) chargé, qui est chargé au moyen de la bobine secondaire (442) du transformateur (44) par l'intermédiaire du détecteur (431) AM à diode et du filtre (432) basse fréquence.

4. Commutateur avec système de prévention d'arc selon l'une des revendications précédentes, **caractérisé en ce que** l'actionneur (42) est utilisé non seulement pour déconnecter le circuit à l'apparition soit d'un arc série (AS), soit d'un arc parallèle (AP), mais également pour déconnecter chaque charge et la déconnecter de la source (1) de tension continue (CC) et d'autres composants de l'installation.

5. Commutateur avec système de prévention d'arc selon la revendication 4, **caractérisé en ce qu'**il s'agit d'un commutateur (47) ayant au moins quatre interrupteurs (473, 474, 475, 476).

6. Commutateur avec système de prévention d'arc selon l'une des revendications précédentes, **caractérisé en ce que** la source (1) de tension continue (CC) représente au moins une cellule photovoltaïque.

7. Commutateur avec système de prévention d'arc selon les revendications 1 à 5, **caractérisé en ce que** la source (1) de tension continue (CC) représente un panneau photovoltaïque comprenant au moins deux cellules photovoltaïques.

8. Commutateur avec système de prévention d'arc selon les revendications 1 à 5, **caractérisé en ce que** la source (1) de tension continue (CC) est une centrale photovoltaïque comprenant au moins deux panneaux photovoltaïques.

9. Commutateur avec système de prévention d'arc selon l'une des revendications précédentes, **caractérisé en ce que** chaque charge électrique est indirectement, par l'intermédiaire d'au moins un convertisseur (3) CC/CA, électriquement interconnectée avec ladite source (1) de tension continue (CC).
